# EUROPÄISCHE PATENTANMELDUNG

(11) **EP 4 006 805 A2**
(43) Veröffentlichungstag der Anmeldung: **01.06.2022**
(21) Anmeldenummer: 18188504.7
(22) Anmeldetag: 10.08.2018
(51) Int. Cl.: G06Q 30/00, G09F 3/20

(54) **SYSTEM ZUR PREISAUSZEICHNUNG MITTELS EINER SCHAUTAFEL; SOWIE SCHAUTAFEL ZUR PREISAUSZEICHNUNG**

(71) Anmelder: VISI/ONE GmbH, 42857 Remscheid (DE)
(72) Erfinder: Kalheber, Michael, 42929 Wermelskirchen (DE); Kalheber, Stefanie, 42929 Wermelskirchen (DE); Kalheber, Konstantin, 10245 Berlin (DE)
(74) Vertreter: Müller, Enno

(57) **Zusammenfassung**

Die Erfindung betrifft ein System zur Preisauszeichnung mittels einer Schautafel (1), in der eine drahtlose ansteuerbare Displayvorrichtung (26) mit einem Display (25) und einer Einrichtung zum drahtlosen Erfassen von Daten angeordnet ist, insbesondere in Bezug auf Kraftfahrzeuge (2), wobei weiter ein Bildaufbau des Displays (25) zufolge empfangener Daten vorgenommen wird. Um ein System der in Rede stehenden Art in vorteilhafter Weise weiter zu verbessern, wird vorgeschlagen, dass eine Frequenz des Bildaufbaus geringer ist als eine Frequenz zur Übermittlung von Daten, mittels welchen der Bildaufbau des Displays (25) vorgenommen wird. Nach einem weiteren Erfindungsgedanken ist darauf abgestellt, dass mehrere Displays (25, 32) derart zu einer Gruppe zusammengefasst sind, dass diese immer einen selben Bildaufbau aufweisen. Auch kann nach einem weiteren Erfindungsgedanken darauf abgestellt sein, dass eine Displayvorrichtung (26) mit dem Bussystem eines Kraftfahrzeugs (2) verbindbar ist. Die Erfindung betrifft zudem eine Schautafel (1) zur Preisauszeichnung, in der bevorzugt eine drahtlos ansteuerbare Displayvorrichtung (26) mit einem Display (25) und einer Einrichtung zum drahtlosen Erfassen von Daten angeordnet ist, insbesondere in Bezug auf Kraftfahrzeuge (2).

## Beschreibung

### Gebiet der Technik

Die Erfindung betrifft zunächst ein System zur Preisauszeichnung mittels einer Schautafel, in der eine drahtlos ansteuerbare Displayvorrichtung mit einem Display und einer Einrichtung zum drahtlosen Erfassen von Daten angeordnet ist, insbesondere in Bezug auf Kraftfahrzeuge, wobei weiter ein Bildaufbau des Displays zufolge empfangener Daten vorgenommen wird.

### Stand der Technik

Ein solches System zur Preisauszeichnung mittels einer Schautafel ist aus dem Stand der Technik bekannt. Es wird bspw. auf die DE 10 2015 121 285 A1 verwiesen. Die Schautafel, bspw. Preisauszeichnungstafel, ist mit einem drahtlos ansteuerbaren Display versehen, insbesondere mit einem Display in Art eines bekannten E-Papers. Texte oder Bilder werden hierbei bevorzugt dauerhaft angezeigt, ohne dass hierfür eine Erhaltungsspannung erforderlich ist. Die Anzeige auf dem Display kann jedoch geändert werden.

### Zusammenfassung der Erfindung

Im Hinblick auf den vorbeschriebenen Stand der Technik ergibt sich die Aufgabe, ein System der in Rede stehenden Art in vorteilhafter Weise weiter zu verbessern.

Eine mögliche Lösung der Aufgabe ist nach einem ersten Erfindungsgedanken bei einem System gegeben, bei welchem darauf abgestellt ist, dass eine Frequenz des Bildaufbaus geringer ist als eine Frequenz zur Übermittlung von Daten, mittels welchen der Bildaufbau des Display vorgenommen wird.

Die Verbindung zum Datenaustausch mit der dem Display anzuzeigende Daten liefernden Einheit (Zentraleinheit) ist bevorzugt nur zeitlich gestreckt vorgesehen. Insbesondere ergibt sich hierdurch ein neuer Bildaufbau des Displays nur in bestimmten zeitlichen Abständen. Diese zeitlichen Abstände zur Generierung eines Bildaufbaus des Displays sind bevorzugt geringer, weiter bevorzugt wesentlich geringer, als die zeitlichen Abstände, mit welchen von der drahtlos die Daten übertragenden Einheit solche Daten zur Übertragung generiert werden.

So kann weiter das Display entsprechend so eingerichtet sein, ggf. auch veränderbar, dass dieses nicht jeden generierten, bevorzugt drahtlos übermittelten Datensatz zur Erneuerung des Bildaufbaus des Displays nutzt. Dies führt in vorteilhafter Weise zu einer weiteren Verringerung des Energieverbrauchs des Displays.

So kann bspw. eine viertelstündliche, halbstündliche, stündliche oder auch 2-stündliche Aktualisierung des Bildaufbaus vorgenommen werden, darüber hinaus auch ggf. im einstelligen Minutenbereich, während die Daten für einen möglichen Bildaufbau bspw. jede Sekunde oder weiter bspw. jede 10 Sekunden übertragen werden.

Es kann diesbezüglich eine feste Bildaufbaufrequenz vorliegen, bspw. festgelegt halbstündlich. Darüber hinaus ist auch ein asynchroner Bildaufbau in diesem Zusammenhang möglich, entsprechend mit wechselnder Bildaufbaufrequenz.

Die Frequenz zur Übermittlung der Daten, mittels welchen der Bildaufbau des Displays vorgenommen wird, liegt bevorzugt im Sekundenbereich, weiter bevorzugt im Millisekundenbereich, während die Bildaufbaufrequenz bevorzugt mindestens dem 2-Fachen bis hin zu dem 1 x 10⁴ -Fachen, ggf. bis hin zu dem 1 x 10⁶ - Fachen der Datenübermittlungsfrequenz entsprechen kann.

Eine weitere mögliche Lösung der Aufgabe ist nach einem weiteren Erfindungsgedanken bei einem System gegeben, bei welchem darauf abgestellt ist, dass mehrere Displays derart zu einer Gruppe zusammengefasst sind, dass diese immer einen selben Bildaufbau aufweisen.

Zufolge einer logischen Verbindung der Displays einer Gruppe wird ein für die Dauer der Verbindung bestehender logischer Zusammenhang zwischen dem Display und dem auf dem Display angezeigten Bild, insbesondere dem zu einem Bild generierter Datensatz, hergestellt. Bevorzugt führt die Übermittlung von bspw. Datensätzen zum Aufbau des Bildes in einem Display der Gruppe zu einem weiter bevorzugt gleichzeitigen entsprechenden Bildaufbau aller Displays in der Gruppe. Es kann diesbezüglich auch ein asynchroner Bildneuaufbau aller Displays in einer Gruppe erfolgen, bspw. in einem zeitlichen Abstand zueinander hintereinander, bspw. im einstelligen Sekundenabstand.

Derselbe Bildaufbau einer Gruppe von Displays ist zumindest in einem zeitlich begrenzten Bereich von bspw. bis hin zu einer Minute oder zwei Minuten erreichbar. Jedenfalls erfolgt bevorzugt automatisiert bei Generierung eines Bildneuaufbaus ein entsprechender Bildneuaufbau aller Displays in der Gruppe innerhalb eines vorgegebenen Zeitfensters, ggf. zeitgleich.

Auch kann eine mögliche Lösung der Aufgabe nach einem weiteren Erfindungsgedanken bei einem System gegeben sein, bei welchem darauf abgestellt ist, dass eine Display-Vorrichtung mit dem Bussystem eines Kraftfahrzeugs verbindbar ist.

In vielen Kraftfahrzeugen, insbesondere neuerer Bauart, ist eine standarisierte Schnittstelle, bspw. zum Auslesen von Fahrzeugdaten und/oder Fehlercodes, vorgesehen. Über diese Schnittstelle ergibt sich ein Zugang zum Bussystem der Fahrzeugs.

Über dieses Bussystem des Fahrzeugs sind bei entsprechender Verbindung des Bussystems mit der Displayvorrichtung Daten, insbesondere Identifizierungsdaten des Fahrzeuges abrufbar. In Abhängigkeit von diesen Identifizierungsdaten kann der Bildaufbau des Displays unmittelbar erfolgen, bspw. durch Anzeige der Identifizierungsdaten aus dem Bussystems oder eines Teils hiervon auf dem Display. Auch können diese Identifizierungsdaten aus dem Bussystem genutzt werden zum drahtlosen Empfang entsprechender weiterer Daten. Diese weiteren Daten können bspw. bei einem Kraftfahrzeug Verkaufsdaten sein, weiter bspw. der Verkaufspreis und/oder ggf. ein Finanzierungsbeispiel. Bei den unmittelbar aus dem Bussystem des betreffenden Fahrzeugs generierten und angezeigten Daten kann es sich bspw. um den Fahrzeughersteller und/oder das Fahrzeugmodel und/oder Kilometerleistung usw. handeln.

Die Merkmale der vorbeschriebenen unabhängigen Ansprüche sind sowohl jeweils für sich wesentlich als auch in jeder Kombination miteinander von Bedeutung, wobei weiter Merkmale eines unabhängigen Anspruchs mit den Merkmalen eines weiteren unabhängigen Anspruchs oder mit Merkmalen mehrerer unabhängiger Ansprüche kombinierbar sind, weiter aber auch nur mit einzelnen Merkmalen eines oder mehrerer der weiteren unabhängigen Ansprüche.

Weitere Merkmale der Erfindung sind nachstehend, auch in der Figurenbeschreibung, oftmals in ihrer bevorzugten Zuordnung zum Gegenstand des Anspruches 1 und/oder des Anspruches 5 und/oder des Anspruches 7 oder zu Merkmalen weiterer Ansprüche erläutert. Sie können aber auch in einer Zuordnung zu nur einzelnen Merkmalen des Anspruches 1 und/oder des Anspruches 5 und/oder des Anspruches 7 oder des jeweiligen weiteren Anspruches oder jeweils unabhängig von Bedeutung sein.

So kann in einer Weiterbildung des Erfindungsgegenstandes vorgesehen sein, dass die Frequenz des Bildaufbaus veränderbar ist. Die Veränderung kann ferngesteuert erfolgen, bspw. zufolge Eingriff durch ein drahtlos mit der Displayvorrichtung kommunizierendes Element, bspw. Tablet, Smartphone oder PC. Auch kann hierzu eine unmittelbar an dem Display vorgesehene Vorrichtung zur Veränderung der Frequenz vorgesehen sein.

So kann die Displayvorrichtung zur Durchführung eines Bildaufbaus bzw. Bildneuaufbaus gesondert ansteuerbar oder auch mechanisch betätigbar sein. Die entsprechende Ansteuerung oder Betätigung kann drahtlos erfolgen, bspw. zentral gesteuert für eine Gruppe von Displays. Auch kann eine entsprechende Ansteuerung oder Betätigung zur Durchführung eines Bildaufbaus bzw. Bildneuaufbaus unmittelbar an der Schautafel selbst durchgeführt werden, wobei eine solche Befehlsgenerierung ggf. auch den Bildneuaufbau einer Gruppe von Displays auslösen kann.

Hierzu kann zur mechanischen Betätigung an der Displayvorrichtung oder an der Schautafel ein Taster insbesondere ein elektronischer Taster angeordnet sein. Durch Betätigen eines solchen Tasters kann bei Bedarf ein neues Bild mit den aktuell vorliegenden Daten angezeigt werden, um so nicht den üblichen Zeitabstand (Frequenz des Bildaufbaus) abzuwarten, bis ein neues Bild generiert wird. Auch kann durch eine gesonderte Ansteuerung oder mechanische Betätigung, bspw. über einen Taster, ein alternativer Bildaufbau durchgeführt werden, bspw. im Zusammenhang mit der Anordnung der Schautafel im oder an einem Kraftfahrzeug durch Anzeige einer alternativen Finanzierungsmöglichkeit.

Die zu einer Gruppe zusammengefassten Displays können bspw. demselben Fahrzeugtyp zugeordnet sein. Darüber hinaus kann eine Mehrzahl an Displays einer Gruppe auch bspw. demselben Fahrzeug zugeordnet sein, so bspw. ein nahestehendes Display in einer Schautafel und ein fernstehendes Display in einer weiteren Schautafel.

Darüber hinaus können mehrere oder auch alle Displays einer Gruppe von Displays Teil einer Schautafel sein. Entsprechend kann eine Schautafel mehrere Displays aufweisen, die einer Gruppe zugeordnet sind.

In weiterer vorteilhafter Ausgestaltung kann jede Displayvorrichtung über eine eigene Internet- und/oder Mobilfunk-ID verfügen. So weist weiter bevorzugt die Displayvorrichtung eine eindeutige physikalische Adresse auf, bspw. MAC-Adresse oder Ethernet-ID. Über diese eindeutige Adressierung kann eine Displayvorrichtung gezielt angesteuert werden, zur Anzeige eines Bilds auf dem Display.

Auch kann jede Displayvorrichtung zum bidirektionalen Datenaustausch ausgebildet sein. Als Low-Energy-Standard bzw. Low-Energy-Mobilfunknetz bietet sich diesbezüglich "NB IoT" an. Das Display kann hierbei so eingerichtet sein, dass dieses sich mit Präferenz, wenn dieser Standard verfügbar ist, in diesen einwählt.

So kann weiter eine so ausgebildete Schautafel bspw. unmittelbar nur an ein betreffendes Fahrzeug angebracht sein, wobei sich die Schautafel bzw. die Displayvorrichtung selbsttätig über bspw. Mobilfunk mit einer Datenbank verbindet. Diese Datenbank kann in einer sogenannten Cloud gegeben sein.

Die spezielle Eingabe des betroffenen Artikels, hier des Fahrzeuges, kann über eine App oder dergleichen bspw. durch Scannen eines QR-Codes an einem ggf. in oder an der Schautafel angeordneten Ausdruck vorgenommen werden. Die Eingabe kann aber auch durch Auswahl an einem Bildschirm von betreffenden Fahrzeugen vorgenommen werden.

Auch kann eine Displayvorrichtung hinsichtlich des Bildaufbaus verarbeitete Daten, die bereits den konkreten Bildaufbau für ein bestimmtes Bild erbringen, von einem drahtlos angebundenen Rechner-System erhalten. Ein solches Rechner-System kann eine Cloud-basierte Datenbank aufweisen, insbesondere eine dedizierte Datenbank. In dieser sind die betreffenden Daten gespeichert und vorgehalten.

In der sogenannten Cloud kann ein Bild bereits generiert werden, das hiernach drahtlos übertragen auf dem Display angezeigt werden kann.

Die Erfindung betrifft weiter eine Schautafel zur Preisauszeichnung, in der bevorzugt eine drahtlos ansteuerbare Displayvorrichtung mit einem Display und einer Einrichtung zum drahtlosen Erfassen von Daten angeordnet ist, insbesondere in Bezug auf Kraftfahrzeuge.

Schautafeln der in Rede stehenden Art sind aus der eingangs genannten Literatur bekannt.

Im Hinblick auf den bekannten Stand der Technik wird eine technische Problematik der Erfindung darin gesehen, eine Schautafel der in Rede stehenden Art in vorteilhafter Weise weiter zu verbessern.

Eine mögliche Lösung der Aufgabe ist nach einem ersten Erfindungsgedanken bei einer Schautafel gegeben, bei welcher darauf abgestellt ist, dass die Schautafel mehrlagig aufgebaut ist, mit zwei Außenlagen aus einem Hartwerkstoff, wobei zwischen den beiden Außenlagen ein Hohlraum gebildet ist, zur Aufnahme eines Informationsblattes, wobei das Informationsblatt zufolge der Ausgestaltung einer der Außenlagen von außerhalb der Schautafel ablesbar ist.

Bei dem Informationsblatt kann es sich in einfachster Weise um bedrucktes Papier handeln. Darüber hinaus ist diesbezüglich auch bspw. eine bedruckte Folie möglich.

Die Außenlagen aus Hartwerkstoff, bspw. einem Hartkunststoff oder einem Metallwerkstoff, wie weiter bspw. Aluminium, bietet eine Schautafel von hoher Stabilität. Die Schautafel ist hierdurch bevorzugt selbsttragend und biegesteif ausgebildet.

Die freie Ablesbarkeit des Informationsblattes von außerhalb der Schautafel kann bspw. durch eine transparente Ausgestaltung der diesbezüglichen Außenlage zumindest im Bereich des Informationsblattes gegeben sein. Darüber hinaus kann die diesbezügliche Außenlage auch zur Sichtbarmachung des Informationsblattes eine entsprechende, bspw. fensterartige Durchbrechung aufweisen, die sich zu dem zwischen den beiden Außenlagen gebildeten Hohlraum hin öffnet.

Weitere Merkmale der Erfindung sind nachstehend, auch in der Figurenbeschreibung, oftmals in ihrer bevorzugten Zuordnung zum Gegenstand des Anspruches 11 oder zu Merkmalen weiterer Ansprüche erläutert. Sie können aber auch in einer Zuordnung zu nur einzelnen Merkmalen des Anspruches 11 oder des jeweiligen weiteren Anspruches oder jeweils unabhängig von Bedeutung sein.

So kann die Schautafel in einer Weiterbildung eine Schmalrandkante aufweisen, wobei das Informationsblatt von der Schmalrandkante aus zugänglich ist. Der Hohlraum kann sich so zumindest teilweise hin zu dieser Schmalrandkante öffnen.

Bei einer beispielhaften rechteckigen Flächenerstreckung zumindest der bei Nutzung der Schautafel in Sichtrichtung ausgerichteten Außenlage kann sich eine kürzere Schmalrandkante und eine längere Schmalrandkante ergeben.

Zwischen den Außenlagen kann eine Mittellage angeordnet sein. Diese Mittellage kann allein oder zum Teil die Beabstandung der Außenlagen zueinander erbringen.

Die Mittellage kann, wie auch bevorzugt, aus einem Leichtbauwerkstoff, wie bspw. Hartschaumstoff bestehen. Hier kommt bspw. ein extrudierter Polystyrol-Hartschaum (XPS) zur Anwendung. Darüber hinaus kann der Leichtbauwerkstoff auch eine sogenannte Honeycomb-Struktur aufweisen.

In weiterer Ausgestaltung kann die Mittellage zur Ausbildung des Hohlraumes eine zu einer Schmalrandkante, bevorzugt nur einer Schmalrandkante, offene Aussparung aufweisen. In dieser Aussparung ist in bevorzugter Ausgestaltung das Informationsblatt einlegbar, bspw. und auch bevorzugt zufolge Einschieben des Informationsblattes von der offenen Schmalrandkante der Schautafel ausgehend in die offene Aussparung.

Die Öffnung der Aussparung kann im Benutzungszustand der Schautafel, in welchem Benutzungszustand die Schautafel bspw. in oder an einem Kraftfahrzeug gehaltert, bspw. steckgehaltert ist und die bspw. gedruckten Informationen auf dem Informationsblatt und/oder die bildhaft dargestellten Informationen auf dem Display für den Benutzer lesbar sind, oben angeordnet sein. Alternativ oder auch kombinativ hierzu kann die Öffnung der Aussparung im Benutzungszustand der Schautafel seitlich angeordnet sein.

Auch kann die Schautafel eine Durchgangsöffnung aufweisen, welche beiden Außenlagen und eine eventuelle Mittellage durchsetzt. Es ergibt sich so bevorzugt eine Durchgangsöffnung, die alle möglichen Lagen der Schautafel durchsetzt.

Die Grundrissabmessung der Durchgangsöffnung kann, wie auch bevorzugt, angepasst sein an die Grundrisserstreckung und Grundrissausgestaltung eines in der Durchgangsöffnung einsetzbaren Displays der Displayvorrichtung, wobei weiter das Display im Bereich der Durchgangsöffnung bevorzugt gehaltert ist, bspw. klemmgehaltert oder steckgehaltert, ggf. aber auch gehaltert zufolge einer Schraubverbindung oder dergleichen.

Darüber hinaus kann die Durchgangsöffnung eine rundum geschlossene Randkante aufweisen. Entsprechend erstreckt sich die Durchgangsöffnung mit Bezug auf einen Grundriss bzw. eine Breitflächenerstreckung der Schautafel mit Abstand zu einer benachbarten Schmalrandkante.

In weiterer Ausgestaltung kann die Schautafel ein Steckboard aufweisen, mit einem oder mehreren Steckplätzen. Das Steckboard ist bevorzugt Teil der Displayvorrichtung. Bei Anordnung von mehreren Steckplätzen können diese unterschiedliche Schnittstellen anbieten. Alternativ bieten eine Mehrzahl von Steckplätzen gleiche Schnittstellen an, ggf. alle Steckplätze.

So kann in einer möglichen Ausgestaltung ein Steckplatz mit einem Positionsbestimmungssystem bestückt sein, so bspw. mit einem GPS-Modul oder einem IBeacon-Modul.

Eine drahtlos fernsteuerbare Displayvorrichtung bietet bspw. Vorteile bei Nutzung einer so ausgestatteten Schautafel in zu veräußernden Kraftfahrzeugen, da hier der Zugriff auf die Schautafel umständlich oder bei abgeschlossenem Kraftfahrzeug erschwert ist.

In vorteilhafter Weise kann so eine stets aktualisierte Anzeige auf der Schautafel erreicht werden. Dies kann durch eine zuständige Person mittels Eingabe bspw. über einen Computer erfolgen, alternativ bspw. auch unter Nutzung eines Smartphones und einer entsprechenden App. Eine weitere technische Möglichkeit besteht darin, dass die Schautafel oder das Display, weiter bevorzugt ein Informationsblatt oder dergleichen einen Code, insbesondere einen Barcode aufweist, welcher von einem Scanner erfasst wird und sodann basierend auf diesem Barcode, wegen der unmittelbaren Zuordnung, eine Verbindung vorzugsweise unmittelbar zwischen dem genannten Scanner und dem Display bspw. funktechnisch erzeugt wird, sodass dann ggf. über einen dritten Speicher, in welchem die zugehörige Information, insbesondere ein zugehöriger Preis, hinterlegt ist, diese Information bzw. dieser Preis an das Display übertragen werden kann. Der besagte dritte Speicher kann bspw. eine in einer Cloud hinterlegte Datenbank sein.

Das Display bzw. eine dem Display zugeordnete Steuereinheit weist bevorzugt eine eindeutige Identifikation auf, zur gezielten Ansteuerung und Programmierung des Displays.

Neben oder auch anstelle einer beispielhaften Preisinformation können auf dem Display auch weitere Produktinformationen aufgeführt sein.

Das Display kann mit weiteren technischen Funktionselementen, wie bspw. einem Akkumulator und/oder einem Funkmodul und/oder einer Steuereinheit, versehen sein. Diese weiteren Module bilden zusammen mit dem Display die Displayvorrichtung. Die Funktionselemente und das Display können dabei in einem gemeinsamen Gehäuse vorgesehen sein, wobei die sichtbare Bildschirmfläche einer Sichtseite der Schautafel zugeordnet ist und das Display entsprechend angeordnet ist.

Die Funktionselemente können darüber hinaus ggf. auch in einem gegenüber dem Display gesonderten Gehäuseteil oder Gehäuseteilabschnitt vorgesehen sein. So können diese Funktionselemente bspw. rückseitig der Schautafel bzw. der rückseitigen Außenlage angeordnet sein, während auf der Vorderseite das Display angeordnet ist bzw. dessen Bildschirmfläche frei sichtbar ist.

Die elektrische Verbindung zwischen den Funktionselementen und dem Display kann in diesem Fall gegeben sein durch eine Verkabelung, bspw. in Form einer Folien-Leiterbahn.

Weiter kann das Display und können die ggf. gesonderten Funktionselemente unmittelbar an der Schautafel bzw. an einer oder mehrerer der Lagen befestigt sein. Bevorzugt wird diesbezüglich eine lösbare Verbindung.

Das Display ist insbesondere vorderseitig an der Schautafel, also der Sichtseite, welche ein Nutzer zur Erfassung der zu vermittelnden Informationen ansieht, sichtbar.

Das Display kann hierbei vollständig auf der Vorderseite, d.h. der Sichtseite der Schautafel angeordnet sein. Es kann auch nur hinsichtlich seiner Oberfläche in die Schautafel bzw. in die sichtseitige Außenlage integriert sein und einem Durchbruch von rückwärts bspw. in die Schautafel eingesetzt sein.

Insbesondere ist bevorzugt, dass eine Sicht-Außenfläche des Displays etwa ebenengleich zu einer Sicht-Außenfläche des Trägerteils bzw. der äußeren Außenlage angeordnet ist.

Die mit zumindest einem Display versehene Schautafel ist geeignet zum Outdoor- und Indoor-Einsatz.

Die Displayvorrichtung der Schautafel kann permanent oder temporär mit dem auszuzeichnenden Fahrzeug verbunden sein, wobei ein bspw. in einer Cloud generiertes Bild auf einem e-Paper-artigen Display mit Akkumulator können in einer dedizierten, Cloud-basierten Datenbank gespeichert und vorgehalten sein.

Es kann eine dynamische Bilddatengenerierung (Templating) auf Basis von Datensätzen erfolgen, womit eine echte Relation von theoretischen Datenpunkten/Datensätzen (in der Cloud-basierten Datenbank) und der materialisierten, realistischen Darstellung auf dem Display erreicht werden kann.

Die ggf., wie auch bevorzugt, bidirektionale Datenübertragung kann unter Nutzung eines Mobilfunknetzes erreicht sein (bspw. GSM, 3G, 4G, 5G, NB IoT).

Die Displayvorrichtung oder das Display unmittelbar kann hierzu über eine eigene Mobilfunk-ID verfügen. Diese kann entsprechend eingespeichert sein. Auch kann das Display bzw. die Displayvorrichtung hierzu eine Aufnahme für einen SIM-Chip (SIM-Karte) aufweisen.

Ein Teil der Displayvorrichtung ist bevorzugt auch ein Controller, der die einzelnen Komponenten miteinander verbindet.

Darüber hinaus kann ein Temperatursensor und/oder ein Batterieladungssensor vorgesehen sein.

Das Gehäuse insbesondere des Displays ist in bevorzugter Ausgestaltung Spritzwasser geschützt, weiter bevorzugt insgesamt wasserdicht.

Auch kann das Display einen oder mehrere Taster aufweisen für eine mögliche Interaktion.

Der Akkumulator des Displays bzw. der Displayvorrichtung kann austauschbar oder auch fest installiert sein.

Darüber hinaus können weitere Sensoren nachrüstbar sein, wozu entsprechende Steckplätze in einem Hardwareboard der Schautafel vorgesehen sein können. So kann die Schautafel, insbesondere die Displayvorrichtung bspw. nachrüstbar sein mit GPS, B-Con (aktiv/passiv), NFC oder auch mit Low Energy Bluetooth.

Das e-Paper-artige Display kann sich, wie bevorzugt, selbsttätig mit der hinterlegten Datenbank, insbesondere der Cloud verbinden.

Darüber hinaus verfügt das Display in einer bevorzugten Ausgestaltung über einen eingebauten Temperatursensor, wobei eine Aktualisierung des dargestellten Bildes bevorzugt nur innerhalb einer definierten Betriebstemperatur erfolgt, bspw. einer Betriebstemperatur von etwa minus 5 Grad Celsius bis etwa plus 70 Grad Celsius.

Jedes Display kann eine eindeutige Identität aufweisen, benötigt darüber hinaus bevorzugt keine individuelle zusätzliche Konfiguration. Die Steuerung kann ausschließlich über einen Cloud-Dienst erfolgen.

Auch zur Einsparung von Akkuleistung verfügt das Display in bevorzugter Ausgestaltung nur über eine sehr reduzierte Rechenleistung und kann nur Bilddateien empfangen. Identifizierung, Konfiguration, Steuerung und Vorverarbeitung von Bilddaten erfolgen bevorzugt allein außerhalb des Displays, bspw., wie auch bevorzugt, in der zugeordneten Cloud.

### Kurze Beschreibung der Zeichnungen

Im Folgenden wird die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: eine Schautafel in perspektivischer Darstellung, eine erste Ausführungsform betreffend;
- Fig. 2: die Schautafel gemäß Fig. 1 in einer Ansicht auf die Sichtfläche;
- Fig. 3: den vergrößert dargestellten Schnitt gemäß der Linie III - III in Fig. 2;
- Fig. 4: den vergrößert dargestellten Schnitt gemäß der Linie IV - IV in Fig. 2;
- Fig. 5: die Schautafel in einer weiteren, partiell aufgebrochenen perspektivischen Darstellung;
- Fig. 6: die Schautafel gemäß Fig. 1 in einer perspektivischen Explosionsdarstellung;
- Fig. 7: in einer zweiten Ausführungsform die Schautafel in perspektivischer Explosionsdarstellung;
- Fig. 8: die Schautafel gemäß Fig. 7 in Ansicht auf die Sichtseite;
- Fig. 9: den vergrößerten Schnitt gemäß der Linie IX - IX in Fig. 8;
- Fig. 10: den vergrößerten Schnitt gemäß der Linie X -X in Fig. 8;
- Fig. 11: die Schautafel in einer möglichen Nutzungsstellung bei Anordnung der Schautafel in einem Kraftfahrzeug;
- Fig. 12: die Anordnung einer Gruppe von Schautafeln in gleichen Fahrzeugen;
- Fig. 13: die Schautafel mit einem kabelgebundenen Anschluss an ein Bussystem des Kraftfahrzeugs;
- Fig. 14: die Schautafel gemäß Fig. 13 in einer perspektivischen Einzeldarstellung;
- Fig. 15: eine der Fig. 13 entsprechende Darstellung, jedoch unter Nutzung einer Funkverbindung zwischen Schautafel und Bussystem;
- Fig. 16: die Schautafel in weiterer Ausführungsform in perspektivischer Darstellung und
- Fig. 17: eine explosionsperspektivische Darstellung einer Schautafel in einer weiteren Ausführungsform.

### Beschreibung der Ausführungsformen

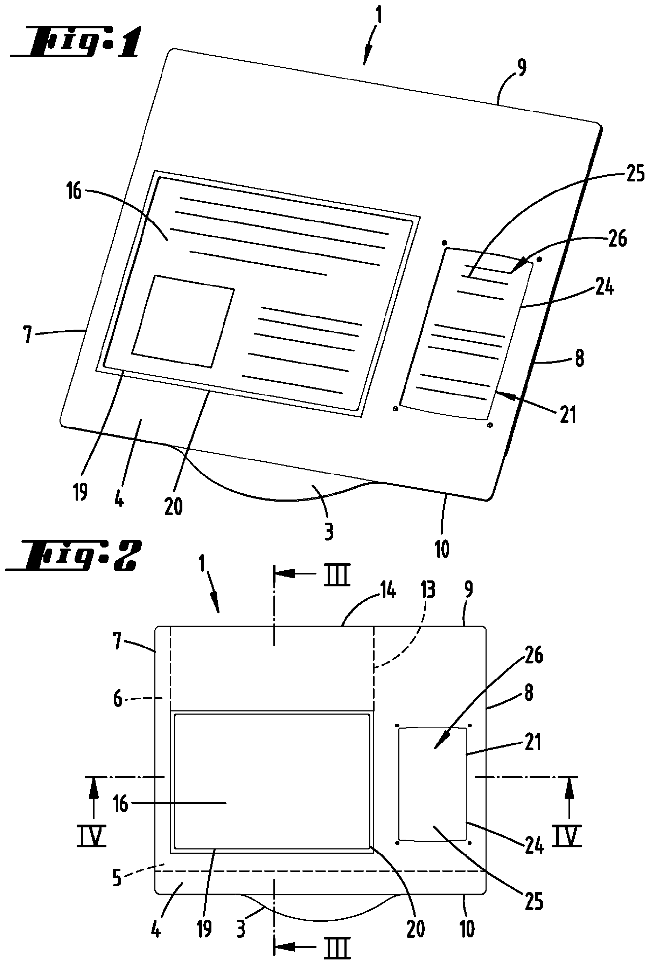

Dargestellt und beschrieben ist, zunächst mit Bezug zu bspw. den Figuren 1 und 2 oder auch 8, eine Schautafel 1, die etwa einen rechteckigen Grundriss aufweist, mit einem Seitenverhältnis von etwa 1 : 1,5 bis 1:3 und einer längeren Kantenlänge von 100 bis 1500 mm, weiter bevorzugt etwa 400 bis 700 mm. Sie dient beispielsweise als Preisauszeichnungstafel für ein Kraftfahrzeug 2.

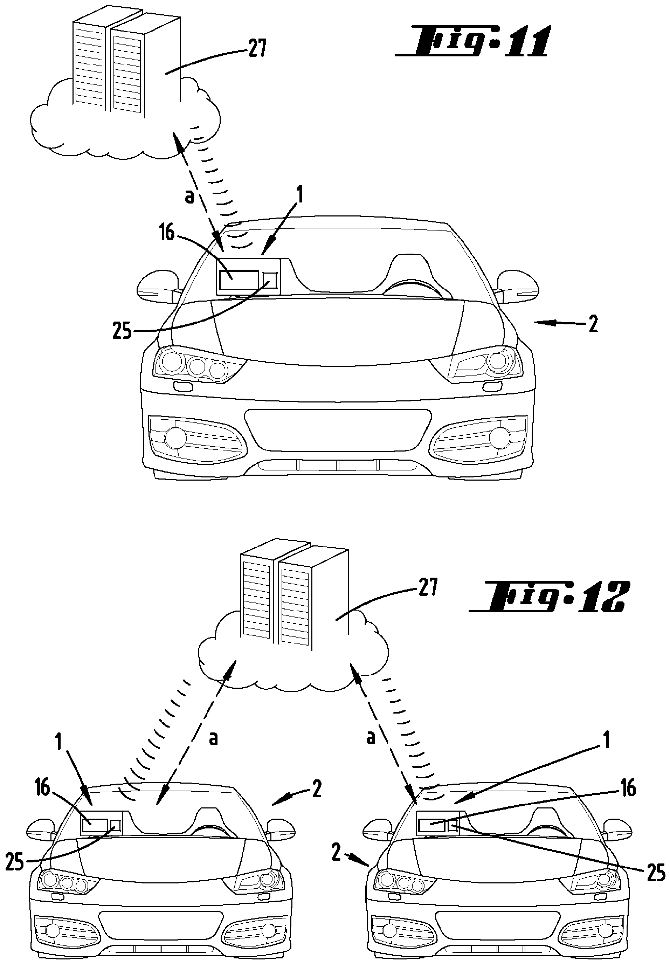

Die Schautafel 1 kann, wie auch dargestellt, im Nutzungszustand der Schautafel 1 im Bereich der nach unten weisenden Schmalrandkante einen Einsteckabschnitt 3 aufweisen. Mit diesem Einsteckabschnitt 3 kann die Schautafel 1 etwa in einem Kraftfahrzeug 2 steckgehaltert sein, bspw. durch Einstecken in einen Lüftungsschlitz oder jedenfalls ein Einstecken hinter der Windschutzscheibe (vgl. Figur 11).

Der Einsteckabschnitt 3 ist bevorzugt einstückig und materialeinheitlich mit einer sichtseitigen Außenlage 4 der insgesamt bevorzugt mehrlagig ausgebildeten Schautafel 1 gebildet.

Im Wesentlichen kann die Schautafel 1 dreilagig ausgebildet sein, mit zwei Außenlagen 4 und 5 und einer Mittellage 6.

Beide Außenlagen 4 und 5 sind beigesteif ausgebildet, bevorzugt aus einem Hartwerkstoff geformt, bspw. Hartkunststoff oder, wie bevorzugt, in Form einer Aluminiumverbundplatte.

Die Außenlagen 4 und 5 können eine Dicke von etwa 1 bis 4 mm, weiter bevorzugt etwa 1,2 bis 2 mm, aufweisen, wobei in einer möglichen Ausgestaltung die sichtseitige Außenlage 4 eine Dicke aufweisen kann, die etwa dem 1,2-Fachen bis 2-Fachen der Dicke der Außenlage 5 entsprechen kann.

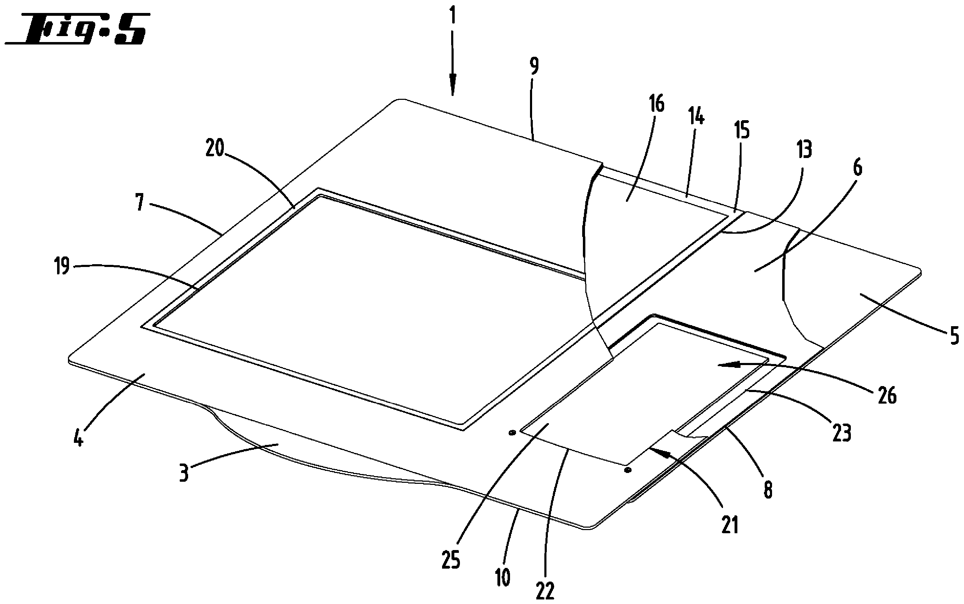

Gemäß der in den Figuren 1 bis 6 dargestellten ersten Ausführungsform kann die Außenlage 5 (Abschlusslage) der Schautafel 1 mit Bezug auf eine Grundrissdarstellung gemäß Figur 2 dreiseitig entlang der zwei kürzeren Schmalrandkanten 7 und 8 und der dem Einsteckabschnitt 3 gegenüberliegenden, in Nutzungsstellung oberen Schmalrandkante 9 mit der sichtseitigen Außenlage 4 abschließen. Lediglich zu der auch den Einsteckabschnitt 3 aufweisenden Schmalrandkante 10 kann die diesbezügliche Schmalrandkante der Außenlage 5 mit parallelem Abstand hierzu verlaufen.

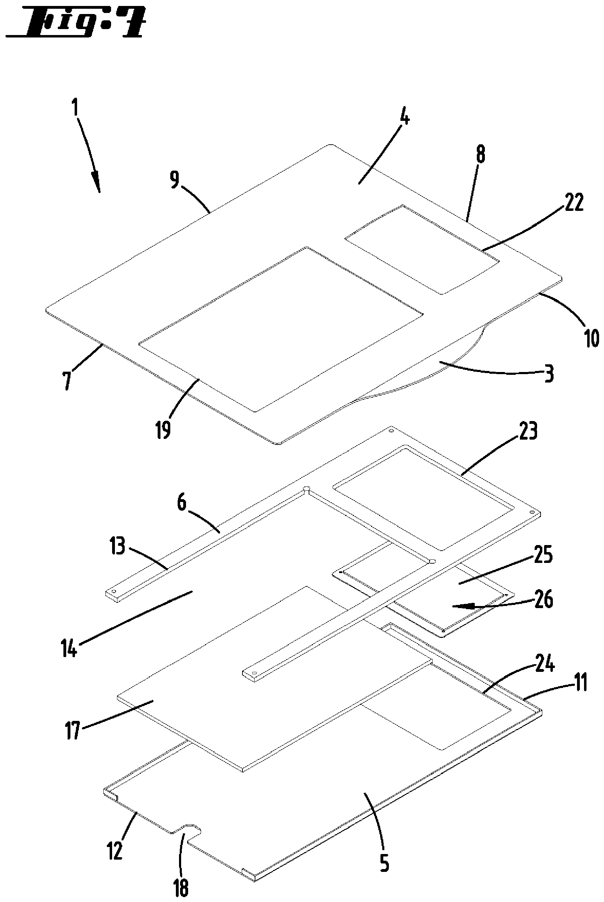

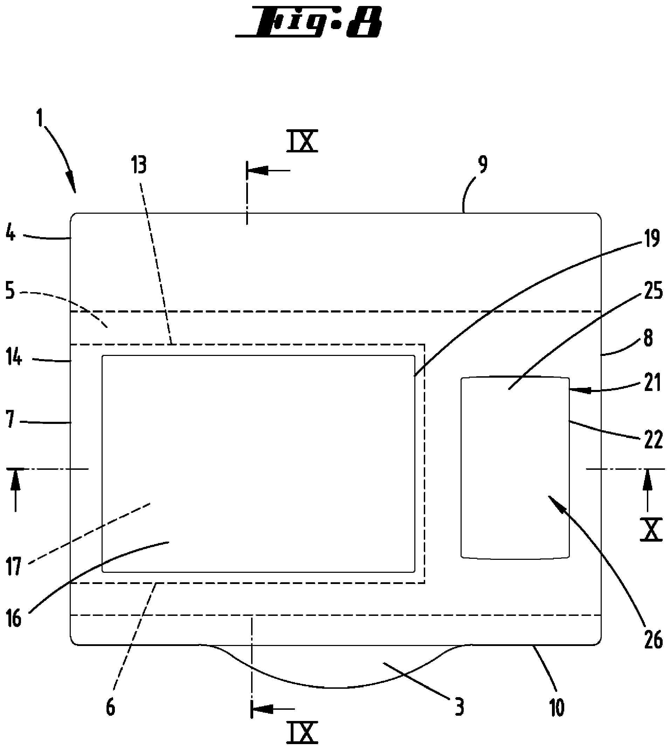

Die Außenlage 5 kann aber auch gemäß den Darstellungen in den Figuren 7 bis 10 so ausgebildet sein, dass diese mit Bezug auf eine Grundrissdarstellung gemäß Figur 8 sowohl zur oberen Schmalrandkante 9 als auch zur unteren Schmalrandkante10 der Außenlage 4 beabstandet ist.

Die Außenlagen 4 und 5 sind im Wesentlichen plattenförmig gestaltet, weisen entsprechend ebenflächige Ober- und Unterflächen auf. Ober- und Unterflächen erstrecken sich bevorzugt in parallel zueinander ausgerichteten Ebenen.

Gemäß der zweiten Ausführungsform kann insbesondere die Außenlage 5 umlaufend mit einem wandungsartigen Stützabschnitt 11 versehen sein, der mit Bezug auf einen Querschnitt durch den Randbereich der Außenlage 5 einen rechten Winkel zu der der Außenlage 4 zugewandten Fläche der Außenlage 5 einschließen kann.

Der Stützabschnitt 11 kann zur Bildung eines Ausbruches 12 unterbrochen sein.

Darüber hinaus kann der Stützabschnitt 11, wie auch bevorzugt, einteilig und materialeinheitlich mit der Außenlage 5 ausgebildet sein.

Die erwähnte Mittelage 6 kann, wie auch bevorzugt, hinsichtlich ihrer im Grundriss betrachteten Erstreckungsmaße angepasst sein an die Außenlage 5. In der dargestellten ersten Ausführungsform entspricht die Längs- und Quererstreckung der Mittellage 6 der der Außenlage 5. In der weiter dargestellten zweiten Ausführungsform ist die Mittellage 6 bezüglich ihrer Längs- und Querabmessung angepasst an die durch den umlaufenden Stützabschnitt 11 der Außenlage 5 begrenzten Flächenerstreckung der Außenlage 5.

Darüber hinaus ist die Mittellage 6 in bevorzugter Ausgestaltung aus einem Leichtbauwerkstoff gebildet, so weiter bevorzugt aus einem Hartschaum, gegebenenfalls gebildet in einer Honeycomb-Struktur.

Die einzelnen Lagen können zur Bildung der Schautafel 1 miteinander verklebt sein, dies insbesondere bei einer Ausgestaltung der Mittellage 6 gemäß dem ersten Ausführungsbeispiel in einer Dicke von 0,5 bis bspw. 3 mm, weiter bspw. 1 mm.

Bei der in den Figuren 7 bis 10 dargestellten zweiten Ausführungsform ist eine Mittellage 6 größerer Dicke vorgesehen, so bspw. mit einer Dicke von 4 bis 7 mm, weiter bspw. 5 mm. Die senkrecht zur Flächenerstreckung betrachtete Höhe des umlaufenden Stützabschnittes 11 ist an die Dicke der Mittellage 6 angepasst, bzw. gegenüber der Dicke der Mittellage 6 um beispielsweise 0,5 bis 2 mm, weiter etwa 1 mm, vergrößert. Entsprechend findet die Mittellage 6 vollständig Aufnahme in dem durch den Stützabschnitt 11 umlaufend begrenzten Bereich der Außenlage 5.

Es kann auch bei dieser zweiten Ausführungsform insbesondere zwischen Außenlage 4 und Mittellage 6 eine Verklebung vorgesehen sein und darüber hinaus eine Schraubfestlegung der Außenlage 5 an der Mittellage 6 bei Abstützung der Außenlage 5 über die Stirnfläche des Stützabschnitts 11 an der zugewandten Rückenfläche der Außenlage 4.

Auch kann eine unmittelbare Verschraubung der Außenlage 5 an der Außenlage 4 gegeben sein.

Die Mittellage 6 weist eine in Anordnungsstellung zu einer Schmalrandkante der Schautafel 1 hin sich öffnende Aussparung 13 auf. Mit Bezug auf die in den Figuren 1 bis 6 dargestellte erste Ausführungsform ergibt sich eine Öffnung der Aussparung 13 im Bereich der oberen Schmalrandkante 9. Bei der in den Figuren 7 bis 10 dargestellten zweiten Ausführungsform ergibt sich eine Öffnung der Aussparung 13 im Bereich einer seitlichen Schmalrandkante 7, zugewandt dem Ausbruch 12 des Stützabschnittes 11.

Durch diese Öffnung 14 ist ein sich zwischen den Außenlagen 4 und 5 im Bereich der Aussparungen 13 ergebender Hohlraum 15 zugänglich.

In diesen Hohlraum 15 ist, durch die Öffnung 14 einführ- bzw. entnehmbar, ein Informationsblatt 16 einlegbar. Hierbei kann es sich um einen bedruckten Papier- oder Folienbogen handeln, mit einer bevorzugten Grundrissabmessung, die der Grundrissabmessung der mittellagenseitigen Aussparung 13 im Wesentlichen entspricht, dabei die diesbezüglichen Längs- und Quermaße der Aussparung 13 gegebenenfalls zur besseren Handhabung etwas unterschreitet.

Bei der in den Figuren 1 bis 6 dargestellten ersten Ausführungsform ist zufolge der hier relativ dünn gestalteten Mittellage 6 das Informationsblatt 16 unmittelbar in den Hohlraum 15 eingeschoben.

Bei der in der zweiten Ausführungsform gegenüber der ersten Ausführungsform wesentlich dickeren Mittellage 6 ist zur unterstützenden Halterung des Informationsblattes 16 eine grundrissmäßig an die Aussparung 13 im Wesentlichen angepasste Einlegeplatte 17 vorgesehen, die gegebenenfalls zusammen mit dem Informationsblatt 16 durch die Öffnung 14 in den Hohlraum 15 eingeschoben werden kann.

Die Einlegeplatte 17 kann aus demselben Material wie die Mittellage 6 bestehen, so entsprechend bspw. aus einem Hartschaum.

Die senkrecht zur Flächenerstreckung betrachtete Dicke der Einlegplatte 17 ist gegenüber der in selber Richtung betrachteten Dicke der Mittellage der somit entsprechenden Höhe des Hohlraumes 15 verringert, so dass sich auch hier, wie bei dem ersten Ausführungsbeispiel unmittelbar zwischen den beiden Außenlagen 4 und 5, ein spaltartiger Aufnahmebereich für das Informationsblatt 16 ergibt.

Zur verbesserten Handhabung, insbesondere zur verbesserten Entnahme insbesondere des Informationsblattes 16 ist in der Außenlage 5 zugeordnet der schmalrandkantenseitigen Öffnung 14 ein randoffener Ausbruch 18 vorgesehen.

Das eingelegte Informationsblatt 16 ist zufolge entsprechender Ausgestaltung der sichtseitigen Außenlage 4 von außerhalb der Schautafel 1 ablesbar.

Hierzu kann die Außenlage 4 einen entsprechend angeordneten transparenten Bereich aufweisen.

Dargestellt und auch bevorzugt ist eine fensterartige Öffnung 19 in der Außenlage 4, die bevorzugt eine rundum geschlossene Randkante aufweist. Mit Bezug auf eine Projektion der Öffnungsfläche in eine Richtung senkrecht zur Flächenerstreckung der Außenlage 4 ergibt sich insgesamt eine Erstreckung der Öffnung 19 innerhalb der Aussparung 13.

Gemäß der dargestellten ersten Ausführungsform kann sichtflächenseitig umgebend zu der Öffnung 19 ein Rahmen 20 aufgelegt sein, der bevorzugt mit der Außenlage 4 verklebt ist. Die Dicke des Rahmens 20 bewegt sich bevorzugt im Zehntel-Millimeterbereich bis hin 2 oder 3 mm.

Darüber hinaus kann, wie bevorzugt, benachbart zu der Aussparung 13 bzw. der außenlagenseitigen Öffnung 19 eine Durchgangsöffnung 21 mit im Wesentlichen rechteckförmigem Grundriss vorgesehen sein. Diese durchsetzt bevorzugt beide Außenlagen 4 und 5 sowie die Mittellage 6 und weist eine rundum geschlossene Randkante auf.

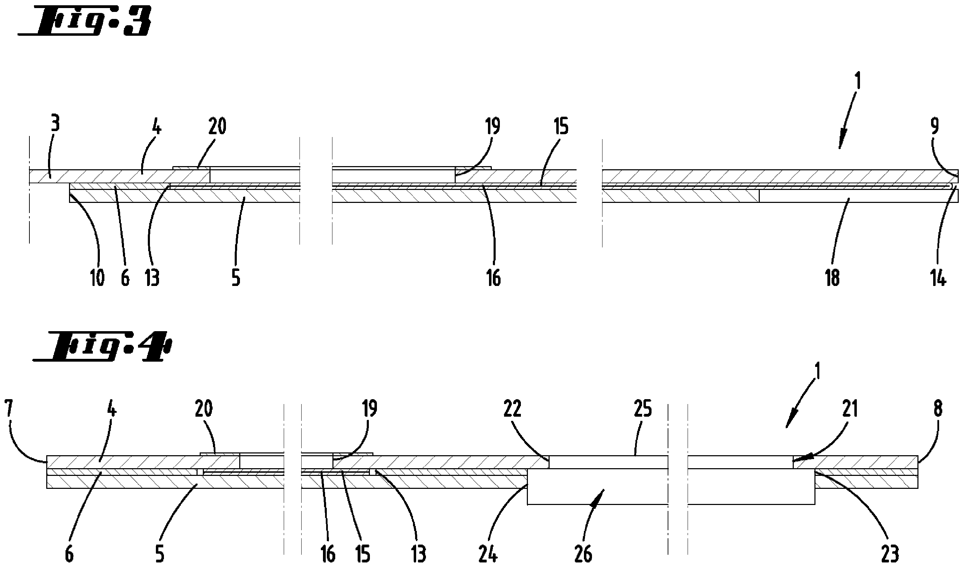

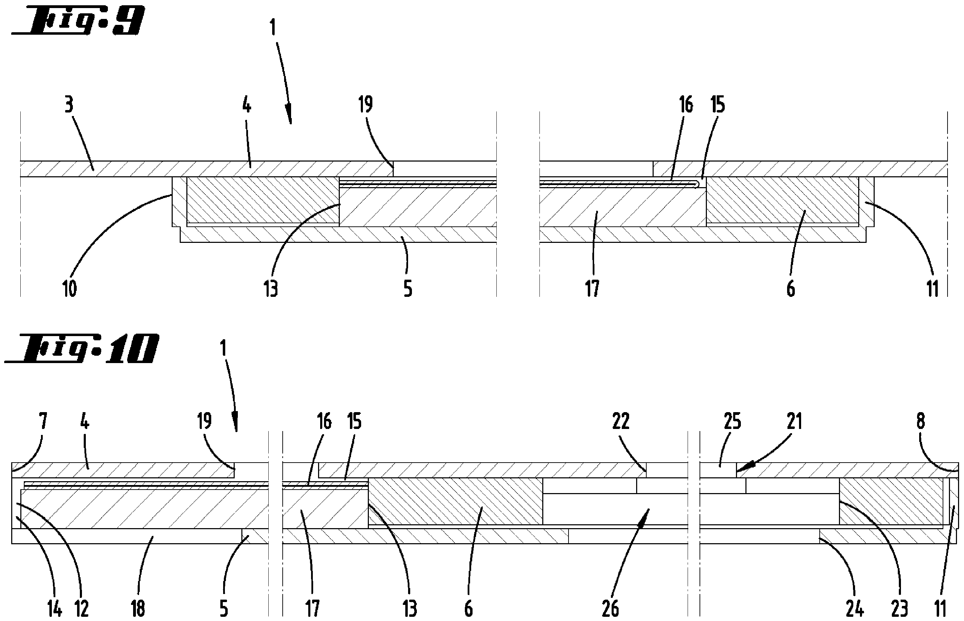

Die Öffnungen 22 und 23 in der Außenlage 5 und der Mittellage 6 können zur Bildung der Durchgangsöffnung 21 gegenüber der diesbezüglichen Öffnung 24 in der sichtseitigen Außenlage 4 größer gewählt sein, so dass sich mit Bezug auf einen Querschnitt gemäß der Darstellung in den Figuren 4 bzw. 10 rückflächenseitig der Außenlage 4 eine umlaufend zu dem Öffnungsrand verlaufende Stützfläche ergeben kann.

In der Durchgangsöffnung 21 ist bevorzugt ein Display 25 in Art eines E-Papers angeordnet und gehaltert. Das Display 25 ist Teil einer Displayvorrichtung 26.

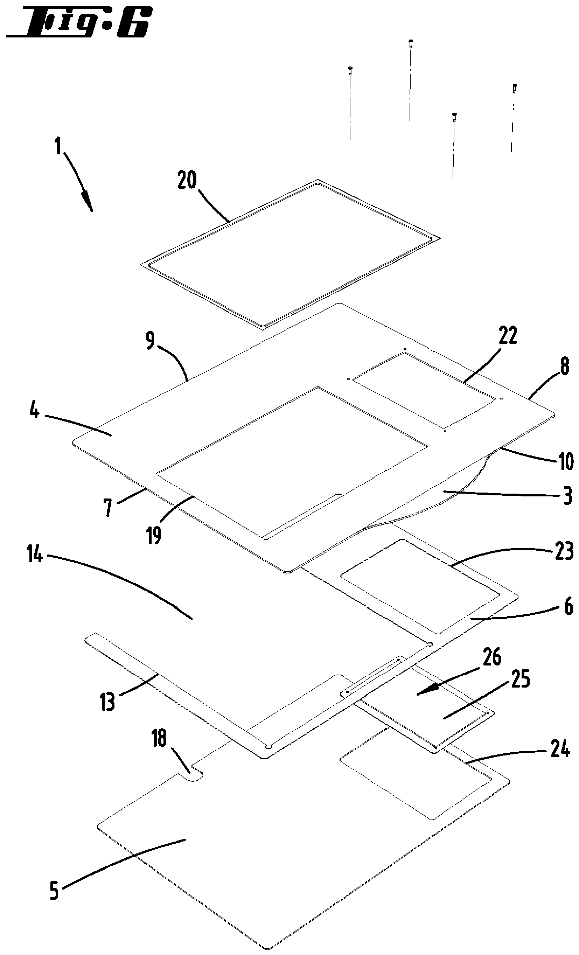

Das Display 25 bzw. die Displayvorrichtung 26 kann anliegend an der vorbeschriebenen Stützfläche angeordnet sein, wobei weiter die Festlegung des Displays 25 bzw. der gesamten Displayvorrichtung 26 bevorzugt durch Verschraubung (siehe Figur 6) erreicht sein kann. Auch ist diesbezüglich eine Klemmhalterung bspw. möglich.

Je nach Wahl der senkrecht zur Flächenerstreckung betrachteten Dicke der Schautafel 1 insgesamt kann die Displayvorrichtung 26 zumindest annähernd vollständig in der Schautafel 1 aufgenommen sein (vgl. bspw. Figur 10) oder bei verhältnismäßig geringerer Dicke gemäß der Schnittdarstellung in Fig. 4 über die rückseitige Oberfläche der Außenlage 5 hinausragen.

Das Display 25 bzw. die Displayvorrichtung 26 ist ausgebildet zur drahtlosen Ansteuerung bzw. zur drahtlosen Erfassung von Daten. Zufolge der empfangenen Daten wird ein Bildaufbau des Displays 25 vorgenommen.

Die Daten zur Generierung des anzuzeigenden Bilds sind bevorzugt gespeichert und vorgehalten in einer dedizierten Datenbank eines drahtlos angebundenen Rechnersystems 27. Hierbei kann es sich, wie auch bevorzugt, um eine Cloud-basierte Datenbank handeln.

Die Displayvorrichtung 26 ist ausgebildet zum bidirektionalen Datenaustausch (siehe Pfeile a in den Figuren 11 und 12).

In dem bevorzugt Cloud-basierten Rechner-System 27 erfolgt eine dynamische Bilddatengenerierung auf Basis von Datensätzen. Entsprechend wird das Bild fertig generiert übertragen und auf dem Display 25 angezeigt.

Die Displayvorrichtung 26 der Schautafel 1 verfügt bevorzugt über eine eindeutige Internet- und/oder Mobilfunk-ID, so weiter insbesondere über eine eindeutige physikalische Adresse.

Es kann weiter die Schautafel 1, insbesondere die Displayvorrichtung 26 der Schautafel 1 oder zugeordnet der Displayvorrichtung 26 ein Steckboard vorgesehen, mit einem oder mehreren Steckplätzen, in welchen Steckplätzen beispielsweise ein Mobilfunk-Modul oder alternativ oder kombinativ hierzu ein Positionierungsmodul steckgehaltert sein kann.

Zur Identifizierung des Kraftfahrzeuges 2 und zur entsprechenden Daten-/Bildabfrage an das Rechner-System 27 zur Anzeige eines Fahrzeuggebundenen Bildes auf dem Display 25 kann in einer möglichen Ausgestaltung das fahrzeugseitige Bussystem benutzt sein. Über dieses sind fahrzeugspezifische Daten abrufbar.

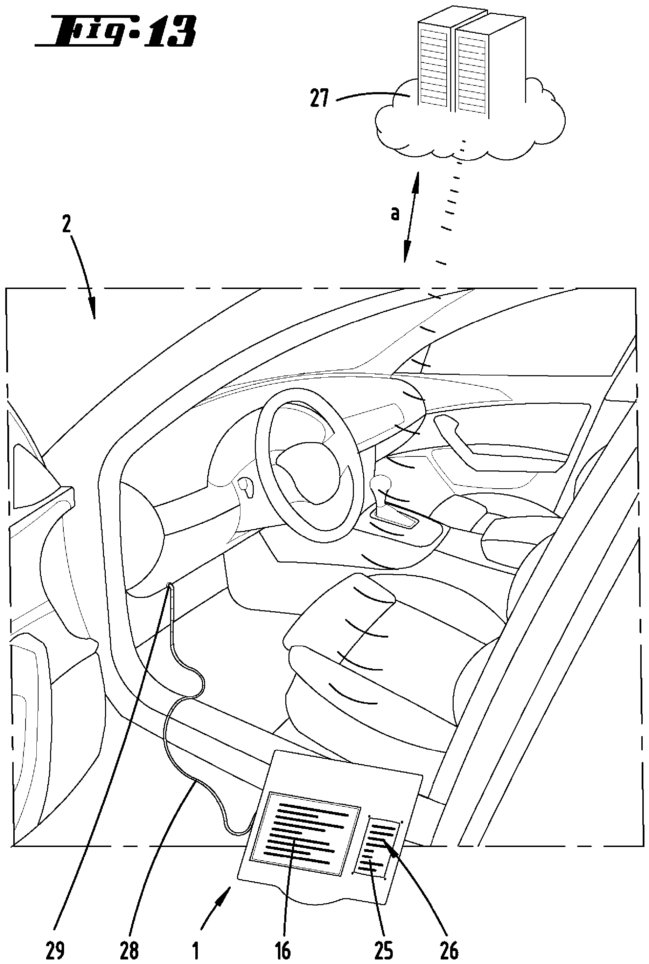

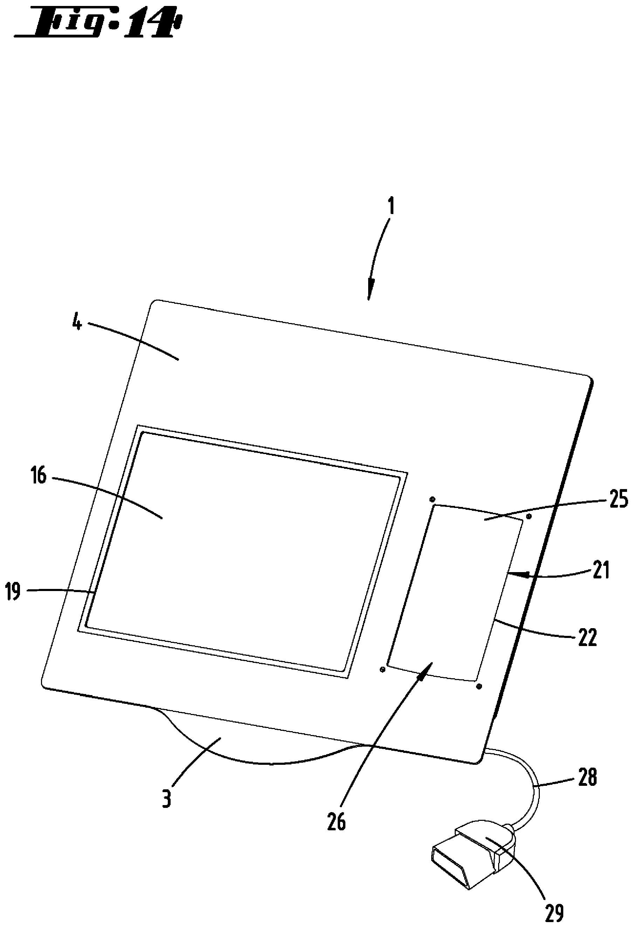

Hierzu kann die Displayvorrichtung 26 der Schautafel 1 über ein Datenkabel 28 und einen Stecker 29 an die fahrzeugseitige Schnittstelle angeschlossen sein (vgl. Figuren 13 und 14).

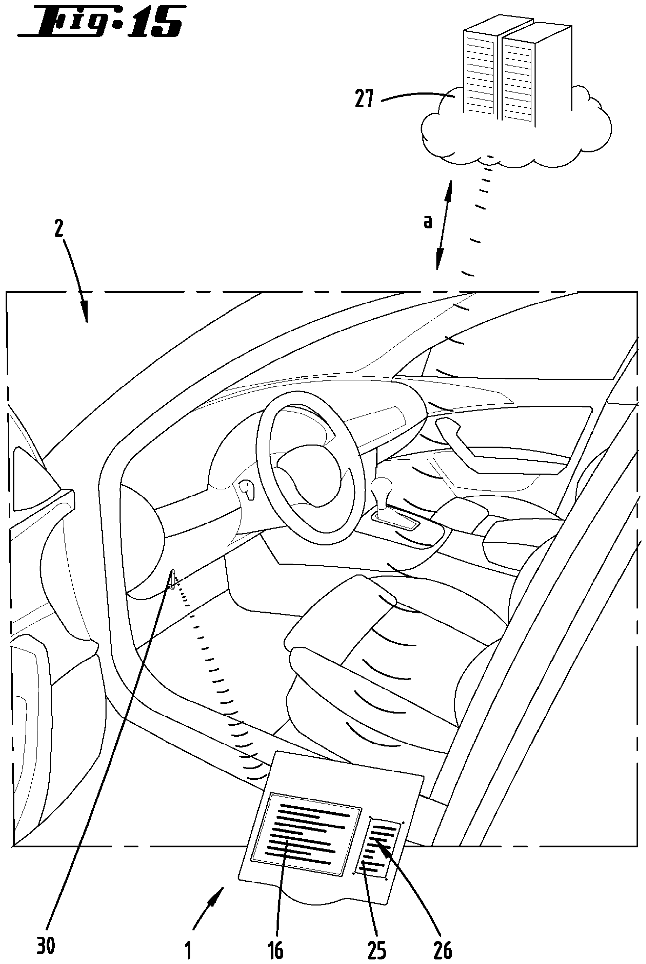

Auch kann in diesem Zusammenhang eine Funkübertragung gemäß der Darstellung in Figur 15 gegeben sein, wozu schnittstellenseitig des Kraftfahrzeugs 2 ein Funkmodul 30 vorgesehen sein kann.

Insbesondere zu Energieeinsparung der bevorzugt Akkumulatorbetriebenen Displayvorrichtung 26 erfolgt ein Bildaufbau bzw. ein Bildneuaufbau des Displays 25 in zeitlich größerem Abstand als es dem zeitlichen Abstand bezüglich der Datenübermittlung zum Bildaufbau des Displays 25 entspricht. So kann bspw. ein regelmäßiger Bildneuaufbau viertelstündlich, halbstündlich oder auch stündlich erfolgen.

Zur unmittelbaren Durchführung eines Bildaufbaus bzw. Bildneuaufbaus kann die Displayvorrichtung 26 auch gesondert angesteuert werden, bspw. ferngesteuert unter Nutzung eines Rechnersystems oder eines Smartphones mit einer App.

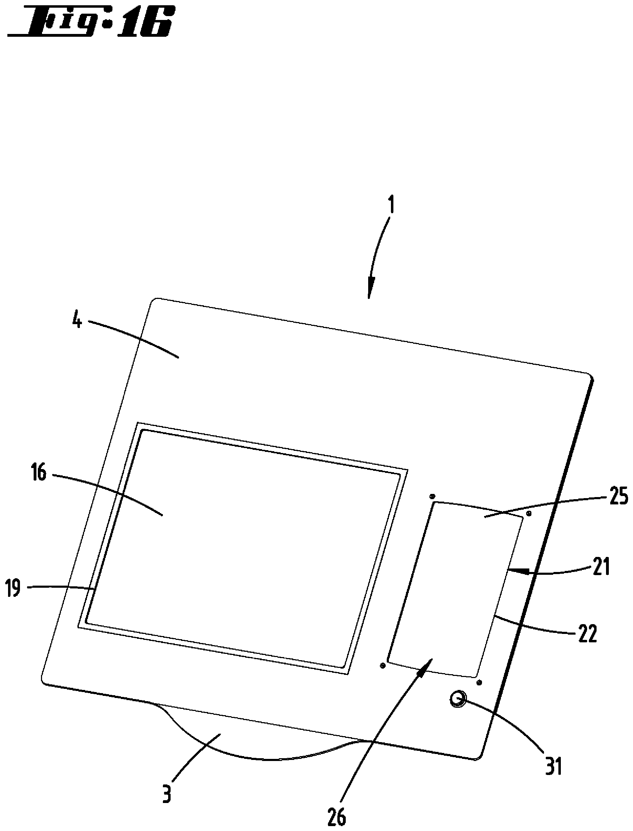

In Figur 16 ist eine mechanische Lösung diesbezüglich schematisch dargestellt. Der Displayvorrichtung 26 ist ein Taster 31 zugeordnet, über welchen bei Betätigung ein Bildneuaufbau des Displays 25 ausgelöst werden kann, dies unter der vorbeschriebenen bevorzugten Funkverbindung mit dem Rechnersystem 27.

Es kann sich hierbei um einen mechanisch wirksamen Taster 31 handeln. Alternativ kann auch ein Sensortaster oder dergleichen vorgesehen sein.

Es können des weiteren mehrere Displays 25 bzw. mehrere Displayvorrichtungen 26 zu einer Gruppe von Displays 25 bzw. Displayvorrichtungen 26 zusammengefasst sein. Jedes Display 25 dieser Gruppe kann dabei, wie bevorzugt, eine eindeutige physikalische Adresse aufweisen.

Die Displays 25 einer Gruppe können immer einen selben Bildaufbau aufweisen. Dies bietet sich bspw., wie in Figur 12 schematisch dargestellt, bei der Auszeichnung gleicher Kraftfahrzeuge 2 an (bspw. gleich in Bezug auf Marke, Typ, Motorisierung usw.). Über das bevorzugt Cloud-basierte Rechner-System 27 wird ein generiertes Bild zugleich an alle Displays 25 einer Gruppe übermittelt. So können auch Schautafeln 1 in örtlich zueinander beabstandeten Kraftfahrzeugen 2 zugleich hinsichtlich der Anzeige des jeweiligen Displays 25 mit einem Bildaufbau bzw. Bildneuaufbau versehen werden.

Auch kann eine Gruppe von Displays 25 nur einem Kraftfahrzeug 2 zugeordnet sein, so bspw. ein Display 25 in einer im Kraftfahrzeug 2 angeordneten Schautafel 1 gemäß der Darstellung in Figur 11 und zumindest ein weiteres Display 25 in einer weiteren Schautafel, die bspw. magnetgehaltert auf dem Fahrzeugdach angeordnet ist oder wobei das Display 25 Teil einer größeren Übersicht-Schautafel ist.

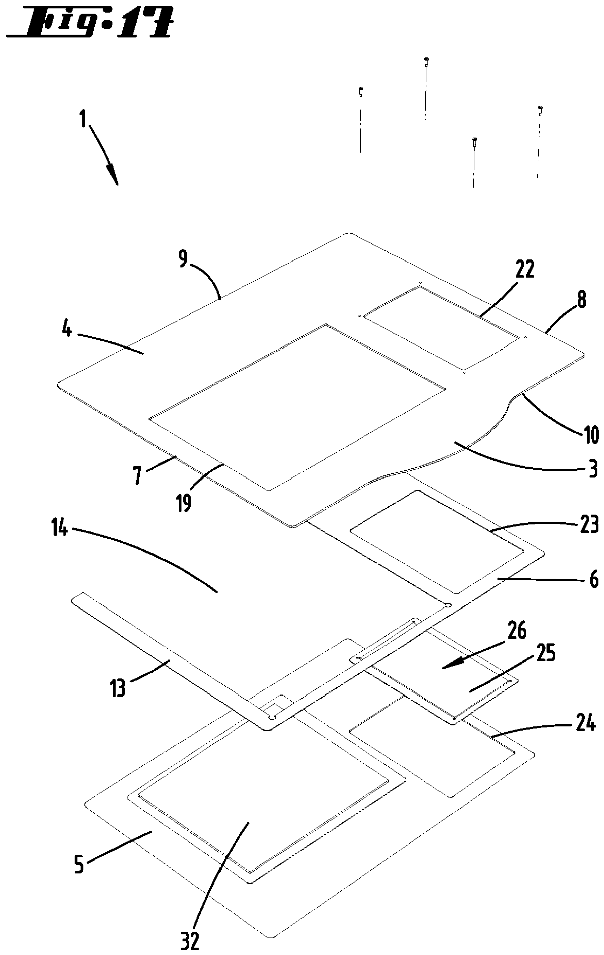

Darüber hinaus kann die Gruppe von Displays 25 auch innerhalb nur einer Schautafel 1 angeordnet sein. Figur 17 zeigt schematisch ein Ausführungsbeispiel, bei welchem anstelle des Informationsblattes 16 und gegebenenfalls der Einlegeplatte 17 ein weiteres Display 32 vorgesehen ist, auf welchem die fahrzeugspeziellen Daten bspw. angezeigt werden, während auf dem benachbarten Display 25 bspw. der Verkaufspreis und ggf. ein Finanzierungsbeispiel oder dergleichen angezeigt wird.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Ein System, das dadurch gekennzeichnet ist, dass eine Frequenz des Bildaufbaus geringer ist als eine Frequenz zur Übermittlung von Daten, mittels welchen der Bildaufbau des Displays 25 vorgenommen wird;

Ein System, das dadurch gekennzeichnet ist, dass die Frequenz des Bildaufbaus veränderbar ist;

Ein System, das dadurch gekennzeichnet ist, dass die Displayvorrichtung 26 zur Durchführung eines Bildaufbaus gesondert ansteuerbar oder mechanisch betätigbar ist;

Ein System, das dadurch gekennzeichnet ist, dass zur mechanischen Betätigung an der Displayvorrichtung 26 ein Taster 31 angeordnet ist;

Ein System, das dadurch gekennzeichnet ist, dass mehrere Displays 25, 32 derart zu einer Gruppe zusammengefasst sind, dass diese immer einen selben Bildaufbau aufweisen;

Ein System, das dadurch gekennzeichnet ist, dass mehrere oder alle Displays 25, 32 einer Gruppe von Displays Teil einer Schautafel 1 sind;

Ein System, das dadurch gekennzeichnet ist, dass eine Displayvorrichtung 26 mit dem Bussystem eines Kraftfahrzeugs 2 verbindbar ist;

Ein System, das dadurch gekennzeichnet ist, dass jede Displayvorrichtung 26 über eine eigene Internet- und/oder Mobilfunk-ID verfügt;

Ein System, das dadurch gekennzeichnet ist, dass jede Displayvorrichtung 26 zum bidirektionalen Datenaustausch ausgebildet ist;

Ein System, das dadurch gekennzeichnet ist, dass eine Displayvorrichtung 26 hinsichtlich des Bildaufbaus verarbeitete Daten, die bereits den konkreten Bildaufbau für ein bestimmtes Bild erbringen, von einem drahtlos angebundenen Rechner-System 27 erhält;

Eine Schautafel, die dadurch gekennzeichnet ist, dass die Schautafel 1 mehrlagig aufgebaut ist, mit zwei Außenlagen 4, 5 aus einem Hartwerkstoff, wobei zwischen den beiden Außenlagen 4, 5 ein Hohlraum 15 gebildet ist, zur Aufnahme eines Informationsblattes 16, wobei das Informationsblatt 16 zufolge der Ausgestaltung einer der Außenlagen 4, 5 von außerhalb der Schautafel 1 ablesbar ist;

Eine Schautafel, die dadurch gekennzeichnet ist, dass die Schautafel 1 eine Schmalrandkante 7 bis 10 aufweist und dass das Informationsblatt 16 von der Schmalrandkante 7 bis 10 aus zugänglich;

Eine Schautafel, die dadurch gekennzeichnet ist, dass zwischen den Außenlagen 4, 5 eine Mittellage 6 angeordnet ist;

Eine Schautafel, die dadurch gekennzeichnet ist, dass die Mittellage 6 aus einem Leichtbauwerkstoff, wie bspw. Hartschaumstoff, besteht;

Eine Schautafel, die dadurch gekennzeichnet ist, dass die Mittellage 6 zur Ausbildung des Hohlraums 15 eine zu einer Schmalrandkante 7 bis 10, bevorzugt nur einer Schmalrandkante 7 bis 10, offene Aussparungen 13 aufweist;

Eine Schautafel, die dadurch gekennzeichnet ist, dass die Öffnung 14 der Aussparung 13 im Benutzungszustand der Schautafel 1 oben angeordnet ist;

Eine Schautafel, die dadurch gekennzeichnet ist, dass die Öffnung 14 der Aussparung 13 im Benutzungszustand der Schautafel 1 seitlich angeordnet ist;

Eine Schautafel, die dadurch gekennzeichnet ist, dass die Schautafel 1 eine Durchgangsöffnung 21 aufweist, welche beide Außenlagen 4, 5 und eine eventuelle Mittellage 6 durchsetzt;

Eine Schautafel (1) nach einem der Ansprüche 11 bis 18, dadurch gekennzeichnet, dass die Durchgangsöffnung (21) eine rundum geschlossene Randkante aufweist.

Eine Schautafel, die dadurch gekennzeichnet ist, dass die Schautafel 1 ein Steckboard aufweist, mit einem oder mehreren Steckplätzen;

Eine Schautafel, die dadurch gekennzeichnet ist, dass ein Steckplatz mit einem GPS-Modul bestückt ist;

Eine Schautafel, die dadurch gekennzeichnet ist, dass ein Steckplatz mit einem IBeacon-Modul bestückt ist;

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

**Liste der Bezugszeichen**

| | | | |
|---|---|---|---|
| 1 | Schautafel | 29 | Stecker |
| 2 | Kraftfahrzeug | 30 | Funkmodul |
| 3 | Einsteckabschnitt | 31 | Taster |
| 4 | Außenlage | 32 | Display |
| 5 | Außenlage | | |
| 6 | Mittellage | a | Pfeil |
| 7 | Schmalrandkante | | |
| 8 | Schmalrandkante | | |
| 9 | Schmalrandkante | | |
| 10 | Schmalrandkante | | |
| 11 | Stützabschnitt | | |
| 12 | Ausbruch | | |
| 13 | Aussparung | | |
| 14 | Öffnung | | |
| 15 | Hohlraum | | |
| 16 | Informationsblatt | | |
| 17 | Einlegeplatte | | |
| 18 | Ausbruch | | |
| 19 | Öffnung | | |
| 20 | Rahmen | | |
| 21 | Durchgangsöffnung | | |
| 22 | Öffnung | | |
| 23 | Öffnung | | |
| 24 | Öffnung | | |
| 25 | Display | | |
| 26 | Displayvorrichtung | | |
| 27 | Rechner-System | | |
| 28 | Datenkabel | | |

## Patentansprüche

1. System zur Preisauszeichnung mittels einer Schautafel (1), in der eine drahtlose ansteuerbare Displayvorrichtung (26) mit einem Display (25) und einer Einrichtung zum drahtlosen Erfassen von Daten angeordnet ist, insbesondere in Bezug auf Kraftfahrzeuge (2), wobei weiter ein Bildaufbau des Displays (25) zufolge empfangener Daten vorgenommen wird, **dadurch gekennzeichnet, dass** eine Frequenz des Bildaufbaus geringer ist als eine Frequenz zur Übermittlung von Daten, mittels welchen der Bildaufbau des Displays (25) vorgenommen wird.

2. System nach Anspruch 1, **dadurch gekennzeichnet, dass** die Frequenz des Bildaufbaus veränderbar ist.

3. System nach einem der vorangehenden Ansprüche, **dadurch gekennzeichnet, dass** die Displayvorrichtung (26) zur Durchführung eines Bildaufbaus gesondert ansteuerbar oder mechanisch betätigbar ist.

4. System nach einem der vorangehenden Ansprüche, **dadurch gekennzeichnet, dass** zur mechanischen Betätigung an der Displayvorrichtung (26) ein Taster (31) angeordnet ist.

5. System nach den Merkmalen des Oberbegriffs des Anspruches 1 oder nach einem der vorangehenden Ansprüche, **dadurch gekennzeichnet, dass** mehrere Displays (25, 32) derart zu einer Gruppe zusammengefasst sind, dass diese immer einen selben Bildaufbau aufweisen.

6. System nach einem der vorangehenden Ansprüche, **dadurch gekennzeichnet, dass** mehrere oder alle Displays (25, 32) einer Gruppe von Displays Teil einer Schautafel (1) sind.

7. System nach den Merkmalen des Oberbegriffs des Anspruches 1 oder nach einem der vorangehenden Ansprüche, **dadurch gekennzeichnet, dass** eine Displayvorrichtung (26) mit dem Bussystem eines Kraftfahrzeugs (2) verbindbar ist.

8. System nach einem der vorangehenden Ansprüche, **dadurch gekennzeichnet, dass** jede Displayvorrichtung (26) über eine eigene Internet- und/oder Mobilfunk-ID verfügt.

9. System nach einem der vorangehenden Ansprüche, **dadurch gekennzeichnet, dass** jede Displayvorrichtung (26) zum bidirektionalen Datenaustausch ausgebildet ist.

10. System nach einem der vorangehenden Ansprüche, **dadurch gekennzeichnet, dass** eine Displayvorrichtung (26) hinsichtlich des Bildaufbaus verarbeitete Daten, die bereits den konkreten Bildaufbau für ein bestimmtes Bild erbringen, von einem drahtlos angebundenen Rechner-System (27) erhält.

11. Schautafel (1) zur Preisauszeichnung, in der bevorzugt eine drahtlos ansteuerbare Displayvorrichtung (26) mit einem Display (25) und einer Einrichtung zum drahtlosen Erfassen von Daten angeordnet ist, insbesondere in Bezug auf Kraftfahrzeuge (2), **dadurch gekennzeichnet, dass** die Schautafel (1) mehrlagig aufgebaut ist, mit zwei Außenlagen (4, 5) aus einem Hartwerkstoff, wobei zwischen den beiden Außenlagen (4, 5) ein Hohlraum (15) gebildet ist, zur Aufnahme eines Informationsblattes (16), wobei das Informationsblatt (16) zufolge der Ausgestaltung einer der Außenlagen (4, 5) von außerhalb der Schautafel (1) ablesbar ist.

12. Schautafel (1) nach Anspruch 11, **dadurch gekennzeichnet, dass** die Schautafel (1) eine Schmalrandkante (7 bis 10) aufweist und dass das Informationsblatt (16) von der Schmalrandkante (7 bis 10) aus zugänglich.

13. Schautafel (1) nach einem der Ansprüche 11 bis 12, **dadurch gekennzeichnet, dass** zwischen den Außenlagen (4, 5) eine Mittellage (6) angeordnet ist.

14. Schautafel (1) nach einem der Ansprüche 11 bis 13, **dadurch gekennzeichnet, dass** die Mittellage (6) aus einem Leichtbauwerkstoff, wie bspw. Hartschaumstoff, besteht.

15. Schautafel (1) nach einem der Ansprüche 11 bis 14, **dadurch gekennzeichnet, dass** die Mittellage (6) zur Ausbildung des Hohlraums (15) eine zu einer Schmalrandkante (7 bis 10), bevorzugt nur einer Schmalrandkante (7 bis 10), offene Aussparungen (13) aufweist.

16. Schautafel (1) nach einem der Ansprüche 11 bis 15, **dadurch gekennzeichnet, dass** die Öffnung (14) der Aussparung (13) im Benutzungszustand der Schautafel (1) oben angeordnet ist.

17. Schautafel (1) nach einem der Ansprüche 11 bis 16, **dadurch gekennzeichnet, dass** die Öffnung (14) der Aussparung (13) im Benutzungszustand der Schautafel (1) seitlich angeordnet ist.

18. Schautafel (1) nach einem der Ansprüche 11 bis 17, **dadurch gekennzeichnet, dass** die Schautafel (1) eine Durchgangsöffnung (21) aufweist, welche beide Außenlagen (4, 5) und eine eventuelle Mittellage (6) durchsetzt.

19. Schautafel (1) nach einem der Ansprüche 11 bis 18, **dadurch gekennzeichnet, dass** die Durchgangsöffnung (21) eine rundum geschlossene Randkante aufweist.

20. Schautafel (1) nach einem der Ansprüche 11 bis 19, **dadurch gekennzeichnet, dass** die Schautafel (1) ein Steckboard aufweist, mit einem oder mehreren Steckplätzen.

21. Schautafel (1) nach einem der Ansprüche 11 bis 20, **dadurch gekennzeichnet, dass** ein Steckplatz mit einem GPS-Modul bestückt ist.

22. Schautafel (1) nach einem der Ansprüche 11 bis 21, **dadurch gekennzeichnet, dass** ein Steckplatz mit einem IBeacon-Modul bestückt ist.

23. System bzw. Schautafel, **gekennzeichnet durch** eines oder mehrere der kennzeichnenden Merkmale eines der vorhergehenden Ansprüche.
